# EUROPÄISCHE PATENTANMELDUNG

(11) **EP 3 786 378 A1**
(43) Veröffentlichungstag der Anmeldung: **03.03.2021**
(21) Anmeldenummer: 19194421.4
(22) Anmeldetag: 29.08.2019
(51) Int. Cl.: E04B 1/76

(54) **BEFESTIGUNGSVORRICHTUNG**

(71) Anmelder: Hilti Aktiengesellschaft, 9494 Schaan (LI)
(72) Erfinder: Ruf, Achim, 6800 Feldkirch (AT); Popp, Uwe, 9443 Widnau (CH); Stuertzel, Christoph, 88138 Sigmarszell (DE)
(74) Vertreter: Hilti Aktiengesellschaft Corporate Intellectual Property

(57) **Zusammenfassung**

Vorrichtung zur Befestigung eines ersten Gegenstands an einem zweiten Gegenstand in einer Befestigungsrichtung, umfassend ein Verankerungselement, ein Zugelement und ein Vorspannelement, wobei das Verankerungselement dafür vorgesehen ist, in einer Befestigungsrichtung in dem zweiten Gegenstand verankert zu werden, wobei das Zugelement dafür vorgesehen ist, eine Zugkraft von dem Verankerungselement auf das Vorspannelement zu übertragen, um das Vorspannelement in der Befestigungsrichtung gegen den ersten Gegenstand vorzuspannen, und wobei das Zugelement einen Verbund aus mehreren Fasern umfasst.

## Beschreibung

Die vorliegende Erfindung betrifft eine Vorrichtung zur Befestigung eines ersten Gegenstands an einem zweiten Gegenstand in einer Befestigungsrichtung.

Derartige Vorrichtungen umfassen häufig ein Verankerungselement, das in dem zweiten Gegenstand verankert wird, und ein Zugelement, das eine Zugkraft von dem Verankerungselement auf ein Vorspannelement überträgt. Es sind Vorrichtungen bekannt, bei denen das Zugelement von einem starren Schaft gebildet ist, der an das Vorspannelement angeformt ist.

Der Erfindung liegt die Aufgabe zu Grunde, eine gattungsgemässe Vorrichtung zur Verfügung zu stellen, mit der eine Befestigung eines ersten Gegenstands an einem zweiten Gegenstand erleichtert und/oder verbessert ist.

Die Aufgabe ist bei einer gattungsgemässen Vorrichtung gelöst, welche ein Verankerungselement, ein Zugelement und ein Vorspannelement umfasst, wobei das Verankerungselement dafür vorgesehen ist, in einer Befestigungsrichtung in dem zweiten Gegenstand verankert zu werden, wobei das Zugelement dafür vorgesehen ist, eine Zugkraft von dem Verankerungselement auf das Vorspannelement zu übertragen, um das Vorspannelement in der Befestigungsrichtung gegen den ersten Gegenstand vorzuspannen, und wobei das Zugelement einen Verbund aus mehreren Fasern umfasst.

Eine vorteilhafte Ausführungsform ist dadurch gekennzeichnet, dass das Zugelement flexibel ist. Bevorzugt sind die Fasern relativ zueinander beweglich.

Eine vorteilhafte Ausführungsform ist dadurch gekennzeichnet, dass die Fasern jeweils eine Faserlängsrichtung aufweisen, welche im Wesentlichen in Richtung der Zugkraft orientiert ist. Bevorzugt erstrecken sich die Fasern jeweils von dem Verankerungselement bis zu dem Vorspannelement. Ebenfalls bevorzugt weisen die Fasern jeweils eine Faserlänge auf, welche kleiner als ein Abstand zwischen dem Verankerungselement und dem Vorspannelement ist.

Eine vorteilhafte Ausführungsform ist dadurch gekennzeichnet, dass das Zugelement an dem Verankerungselement und/oder an dem Vorspannelement befestigt ist. Bevorzugt ist das Zugelement mit dem Verankerungselement und/oder dem Vorspannelement verknotet, verspleisst, vernäht, geklemmt, verschweisst, verlötet und/oder verklebt ist.

Eine vorteilhafte Ausführungsform ist dadurch gekennzeichnet, dass das Verankerungselement und/oder das Vorspannelement einen Kopf und einen Hals aufweist, an welchem das Zugelement befestigt ist.

Eine vorteilhafte Ausführungsform ist dadurch gekennzeichnet, dass das Verankerungselement und/oder das Vorspannelement eine Öse aufweist, an welcher das Zugelement befestigt ist.

Eine vorteilhafte Ausführungsform ist dadurch gekennzeichnet, dass die Fasern zu einem Seil, einem Band oder einem Schlauch verbunden sind.

Eine vorteilhafte Ausführungsform ist dadurch gekennzeichnet, dass die Fasern zusammengedreht, geflochten oder miteinander verwoben sind.

Eine vorteilhafte Ausführungsform ist dadurch gekennzeichnet, dass die Fasern Naturfasern umfassen. Bevorzugt umfassen die Fasern Naturfasern aus Baumwolle, Flachs, Hanf, Kokos, Manila, Sisal und/oder Spinnenseide.

Eine vorteilhafte Ausführungsform ist dadurch gekennzeichnet, dass die Fasern Kunstfasern umfassen. Bevorzugt umfassen die Fasern Kunstfasern aus Karbon, Aramid, Polyester, Polyamid, Polypropylen, Polyethylen und/oder Poly(p-phenylen-2,6-benzobisoxazol)(Zylon)[2].

Eine vorteilhafte Ausführungsform ist dadurch gekennzeichnet, dass die Fasern Metallfasern umfassen. Bevorzugt umfassen die Fasern Metallfasern aus Eisen, Stahl und/oder Aluminium.

Die Erfindung wird im Folgenden unter Bezugnahme auf die Zeichnungen näher erläutert. Es zeigen:
- Fig. 1: eine Befestigungsvorrichtung in einer Seitenansicht,
- Fig. 2: eine Befestigungsvorrichtung in einer Seitenansicht,
- Fig. 3: eine Befestigungsvorrichtung in einer Seitenansicht,
- Fig. 4: eine Befestigungsvorrichtung während eines Befestigungsvorgangs,
- Fig. 5: eine Befestigungsvorrichtung während eines Befestigungsvorgangs,
- Fig. 6: eine Befestigungsvorrichtung während eines Befestigungsvorgangs,
- Fig. 7: eine Befestigungsvorrichtung in einer Seitenansicht,
- Fig. 8: eine Befestigungsvorrichtung in einer Seitenansicht,
- Fig. 9: eine Befestigungsvorrichtung in einer Seitenansicht,
- Fig. 10: eine Befestigungsvorrichtung in einer Seitenansicht,
- Fig. 11: eine Befestigungsvorrichtung in einer Seitenansicht und
- Fig. 12: eine Befestigungsvorrichtung in einer Seitenansicht.

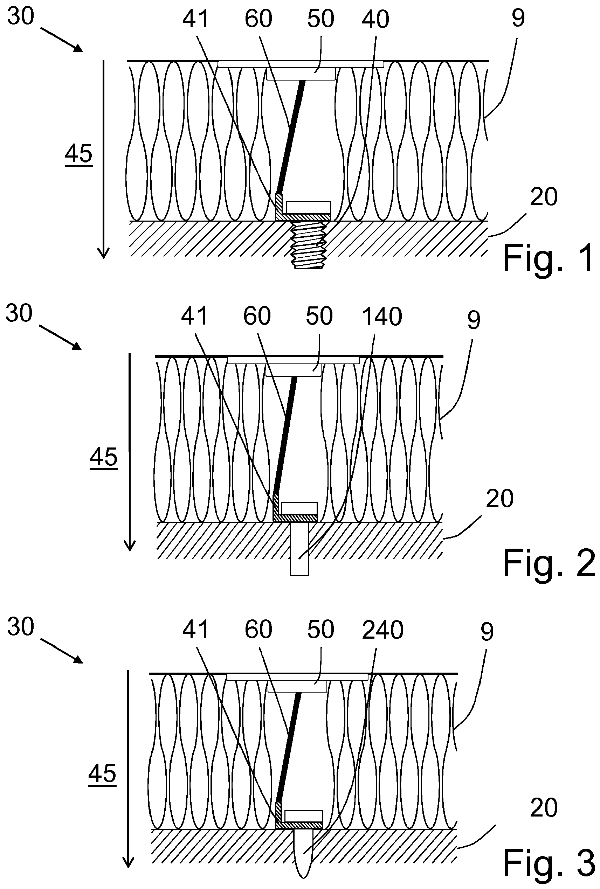

Fig. 1 zeigt einen als Dämmstoffelement ausgebildeten ersten Gegenstand 9, einen als Gebäudehülle, beispielsweise als Dach- oder Wandelement aus Beton, Mauerwerk, Holz oder Metall, oder als Rahmenelement aus Beton, Holz oder Metall, insbesondere als Stahlträger, ausgebildeten zweiten Gegenstand 20 sowie eine Befestigungsvorrichtung 30, welche zur Befestigung des ersten Gegenstands 9 an dem zweiten Gegenstand 20 vorgesehen ist. Die Befestigungsvorrichtung 30 umfasst ein Verankerungselement, welches in einem ersten, in Fig. 1 gezeigten Ausführungsbeispiel eine Schraube 40 umfasst, welche in einem zuvor in dem zweiten Gegenstand 20 beispielsweise mittels eines Bohrwerkzeugs erzeugten Loch durch Einschrauben in einer Befestigungsvorrichtung 45 verankert ist. Weiterhin umfasst die Befestigungsvorrichtung 30 ein tellerförmiges Vorspannelement 50, welches in der Befestigungsrichtung 45 gegen den ersten Gegenstand 9 vorgespannt ist, um den ersten Gegenstand 9 in der Befestigungsrichtung 45 gegen den zweiten Gegenstand 20 zu drücken und an dem zweiten Gegenstand 20 zu halten. Weiterhin umfasst die Befestigungsvorrichtung 30 ein Zugelement 60, welches kraftübertragend einerseits mit der Schraube 40 und andererseits mit dem Vorspannelement 50 verbunden ist. Dadurch überträgt das Zugelement 60 eine Zugkraft von der Schraube 40 auf das Vorspannelement 50, um das Vorspannelement 50 in der Befestigungsrichtung 45 gegen den ersten Gegenstand 9 vorzuspannen.

Das Zugelement 60 umfasst oder besteht aus einem Verbund aus mehreren Fasern. Um das Zugelement 60 flexibel zu gestalten, sind die Fasern relativ zueinander beweglich. Die Fasern weisen jeweils eine Faserlängsrichtung auf, welche im Wesentlichen in Richtung der Befestigungsrichtung 45 und somit der von dem Zugelement 60 übertragenen Zugkraft orientiert ist. Die Fasern erstrecken sich jeweils durchgehend von der Schraube 40 bis zu dem Vorspannelement 50. Bei einigen Ausführungsbeispielen weisen die Fasern jeweils eine Faserlänge auf, welche kleiner als ein Abstand zwischen der Schraube 40 und dem Vorspannelement 50 ist. Bevorzugt sind die Fasern zu einem Seil, einem Band oder einem Schlauch verbunden, beispielsweise zusammengedreht, geflochten oder miteinander verwoben. Die Fasern umfassen Naturfasern, Kunstfasern und/oder Metallfasern. Die Naturfasern bestehen beispielsweise aus Baumwolle, Flachs, Hanf, Kokos, Manila, Sisal und/oder Spinnenseide. Die Kunstfasern bestehen beispielsweise aus Karbon, Aramid, Polyester, Polyamid, Polypropylen, Polyethylen und/oder Poly(p-phenylen-2,6-benzobisoxazol)(Zylon)[2]. Die Metallfasern bestehen beispielsweise aus Eisen, Stahl und/oder Aluminium.

Vorzugsweise ist das Zugelement 60 an der Schraube 40 und an dem Vorspannelement 50 befestigt. Beispielsweise ist das Zugelement 60 mit der Schraube 40 und/oder dem Vorspannelement 50 verknotet, verspleisst, vernäht, geklemmt, verschweisst, verlötet und/oder verklebt. Im vorliegenden Ausführungsbeispiel umfasst das Verankerungselement ein Verbindungselement 41, welches an einem Hals der Schraube 40 gehalten ist, welches eine Öse aufweist, an welcher das Zugelement 60 befestigt ist.

Fig. 2 zeigt ebenfalls einen ersten Gegenstand 9, einen zweiten Gegenstand 20 sowie eine Befestigungsvorrichtung 30 mit einem Verankerungselement, einem Vorspannelement 50 und einem Zugelement 60. Das Verankerungselement ist umfasst einen Dübel 140, welcher in einem zuvor in dem zweiten Gegenstand 20 beispielsweise mittels eines Bohrwerkzeugs erzeugten Loch durch Einschrauben, Verklemmen und/oder Verspreizen in einer Befestigungsvorrichtung 45 verankert ist. Die übrigen Elemente stimmen vorzugsweise mit den entsprechenden Elementen des in Fig. 1 gezeigten Ausführungsbeispiels überein.

Fig. 3 zeigt ebenfalls einen ersten Gegenstand 9, einen zweiten Gegenstand 20 sowie eine Befestigungsvorrichtung 30 mit einem Verankerungselement, einem Vorspannelement 50 und einem Zugelement 60. Das Verankerungselement ist umfasst einen Nagel 240, welcher insbesondere ohne Vorbohren in den zweiten Gegenstand 20 in einer Befestigungsvorrichtung 45 eingetrieben und somit verankert ist. Die übrigen Elemente stimmen vorzugsweise mit den entsprechenden Elementen des in Fig. 1 gezeigten Ausführungsbeispiels überein.

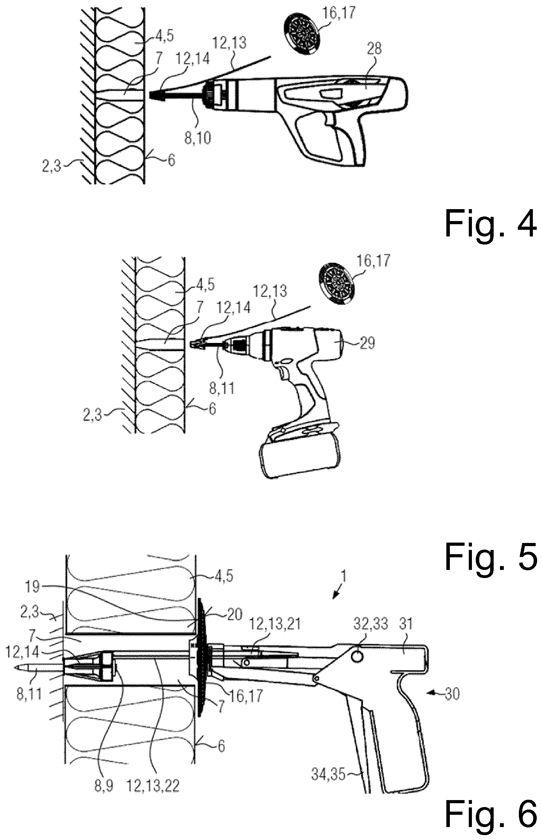

Die Fig. 4 bis 6 zeigen ein System 1 zum Befestigen eines schichtförmigen Bauteils 4, nämlich einer Isolierung 5 an einer Wand 3 eines Gebäudes als einem Setzgegenstand 2. Das System 1 umfasst ein Verankerungselement 8, ein Zugelement 12, ein Vorspannelement 16 und einen Auszugtester 30. Das Verankerungselement 8 und das Zugelement 12 sind als getrennte Bauteile ausgebildet. Das Verankerungselement 8 ist von einer Schraube 10 oder einem Bolzen 11 bzw. Nagel 11 gebildet und am Ende der Schraube 10 bzw. des Bolzens 11 ist ein Haltekopf 9 ausgebildet. Das Verankerungselement 8 ist aus Metall ausgebildet. Das Zugelement 12 aus Kunststoff umfasst einen Faserverbund 13 und eine Kopplungskomponente 14 ebenfalls aus Kunststoff. An der Kopplungskomponente 14 ist eine Haltebohrung 15 ausgebildet, deren Durchmesser kleiner ist als der Durchmesser des Haltekopfes 9, so dass dadurch ein Schaft des Verankerungselements 8 durch die Haltebohrung 15 durchgeführt werden kann, bis der Haltekopf 9 auf der Kopplungskomponente 14 aufliegt. Das Vorspannelement 16 ist als ein tellerförmiges oder scheibenförmiges Auflageteil 17 aus Kunststoff ausgebildet (Fig. 3 und 4) mit einer Öffnung 18 zur Durchführung des Faserverbunds 13 des Zugelements 12. Das Vorspannelement 16 weist eine erste Seite 19 zum Auflegen auf eine Außenseite 6 des schichtförmigen Bauteils 4 sowie eine zweite Seite 20 auf. Die zweite Seite 20 ist gegenüberliegend zu der ersten Seite 19 ausgebildet. An dem Band 13 sind eine Vielzahl von Zähnen 24 bzw. Rillen 25 als Formschlusselemente 23 ausgebildet und an dem Vorspannelement 16 ist eine bewegbare Rastnase 27 als ein Gegenformschlusselement 26 vorhanden. Das Zugelement 12 weist ein erstes oberes Ende auf gemäß der Darstellung in Fig. 3 und dieses erste obere Ende kann durch die Öffnung 18 an dem Vorspannelement 16 durchgeführt werden. Das zweite Ende des Zugelements 12 ist von der Kopplungskomponente 14 gebildet. Aufgrund der Formschlusselemente 23 an dem Faserverbund 13 und des Gegenformschlusselements 26 im Bereich der Öffnung 18 des Vorspannelements 16 kann das Band nur in einer Richtung von der ersten Seite 19 zu der zweiten Seite 20 des Vorspannelements 16 durch die Öffnung 18 durchgeführt werden. Das erste Ende des Zugelements 12 wird dabei zuerst durch die Öffnung 18 an der ersten Seite 19 eingeschoben, so dass dadurch der Faserverbund 13 an der zweiten Seite 20 aus dem Vorspannelement 16 herausragt. Zum Befestigen der Isolierung 5 an der Wand 3 des nicht dargestellten Gebäudes wird die Isolierung 5 zunächst auf die Wand 3 aufgelegt und anschließend wird mit einem nicht dargestellten Bohrer ein Durchgangsloch 7 in die Isolierung 5 eingearbeitet.

In dem in Fig. 4 dargestellten Ausführungsbeispiel wird das Zugelement 12 mit dem an der Kopplungskomponente 14 befestigten Verankerungselement 8 als der Schraube 10 durch das Durchgangsloch 7 durchgeführt, bis die Schraube 10 auf der Wand 3 aufliegt. Anschließend wird mit einem Akkuschrauber 28 (Fig. 4) die Schraube 10 in die Wand 3 eingeschraubt (nicht dargestellt) und dadurch die Schraube 10 an der Wand 3 befestigt. Aufgrund des Aufliegens des Haltekopfes 9 der Schraube 10 auf der Kopplungskomponente 14 sind die Kopplungskomponente 14 und damit auch das Zugelement 12 an der Wand 3 befestigt. Anschließend wird der Faserverbund 13, welcher aus dem Durchgangsloch 7 herausragt, durch das Vorspannelement 16 geschoben, indem das erste Ende des Faserverbunds 13 durch die Öffnung 18 an der ersten Seite 19 des Vorspannelements 16 eingeführt wird, bis die erste Seite 19 des Vorspannelements 16 auf der Außenseite 6 der Isolierung 5 aufliegt (Fig. 6).

Der Auszugtester 30 weist ein Gehäuse 31 auf sowie ein Stellorgan 32 als ein Drehknopf 33. Ferner umfasst der Auszugtester 30 einen Betätigungshebel 35 als Betätigungsorgan 34. An dem Auszugtester 30 ist ferner eine Einführöffnung zum Einführen des ersten Endes des Faserverbunds 13 in den Auszugtester 30 und eine Ausführöffnung zum Ausführen des Faserverbunds 13 aus dem Auszugtester 30 (nicht dargestellt) ausgebildet. Der aus der Öffnung 18 herausragende Teil 21 des Faserverbunds 13 als dem Zugelement 12 wird in die Einführöffnung des Auszugtesters 30 eingeführt und anschließend manuell von Hand auf den Betätigungshebel 35 eine Kraft aufgebracht. Im Auszugtester 30 sind wenigstens zwei nicht dargestellte bewegliche Greifarme vorhanden, welche den Teil 21 des Faserverbunds 13 innerhalb des Auszugtesters 30 greifen und aufgrund der auf den Betätigungshebel 35 aufgebrachten Kraft eine Zugkraft auf den Faserverbund 13 aufbringen, so dass das vordere Ende des Auszugtesters 30 im Bereich der Einführöffnung auf die zweite Seite 20 des Vorspannelements 16 eine Druckkraft aufbringt. Dadurch wird ein anderer Teil 22 des Zugelements 12 als dem Band 13 innerhalb des Durchgangslochs 7 mit einer Prüfzugkraft beansprucht und diese Prüfzugkraft wird von dem Haltekopf 9, welcher auf der Kopplungskomponente 14 aufliegt, auf das Verankerungselement 8 innerhalb der Wand 3 übertragen. Dadurch wird auch die Schraube 10 mit der Prüfzugkraft beaufschlagt und geprüft. Durch das weitere Betätigen des Betätigungshebels 35 wird die Prüfzugkraft erhöht, bis zu einer Sicherheits-Prüfzugkraft. Nach dem Überschreiten der Sicherheits-Prüfzugkraft, so dass die Prüfzugkraft größer ist als die Sicherheits-Prüfzugkraft, wird selbsttätig durch das weitere Betätigen des Betätigungshebels 35 ein nicht dargestellter Schneidmechanismus innerhalb des Auszugtesters 30 aktiviert, so dass der Teil 21 des Zugelements 12 als dem Faserverbund 13 innerhalb des Auszugtesters 30 in der Nähe der Einführöffnung automatisch und selbsttätig abgeschnitten wird.

In Fig. 6 ist ein zweites Ausführungsbeispiel des Systems 1 dargestellt. Das Verankerungselement 8 ist von dem Bolzen 11 bzw. dem Nagel 11 gebildet und der Bolzen 11 wird mit einem Setzgerät 29 in der Wand 3 als dem Setzgegenstand 2 befestigt. Setzgeräte 29 (Fig. 6) dienen dazu, Verankerungselemente 8 als Bolzen 11 oder Nägel 11 in einen Setzgegenstand 2 bzw. Untergrund 2, z. B. eine Wand 3 aus Stahlbeton oder Ziegel, einzutreiben und damit zu befestigen. Das Setzgerät 29 weist hierzu ein Gehäuse aus Metall und/oder Kunststoff auf. Dabei ist innerhalb eines von dem Gehäuse umschlossenen Gerätekörpers ein Setzmechanismus, welcher elektrisch, pyrotechnisch, pneumatisch oder durch die Verbrennung von Gas in einer Brennkammer betrieben ist, angeordnet. Von einem anderen Teil des Gehäuses ist ein Magazin für Verankerungselemente 8 umschlossen. Das Magazin umfasst eine große Anzahl von Verankerungselementen 8. Das in Fig. 4 dargestellte erste Ausführungsbeispiel unterscheidet sich somit von dem in Fig. 5 dargestellten zweiten Ausführungsbeispiel insbesondere dadurch, dass anstelle des Akkuschraubers 28 das Setzgerät 29 verwendet wird und anstelle der Schraube 8 der Bolzen 11.

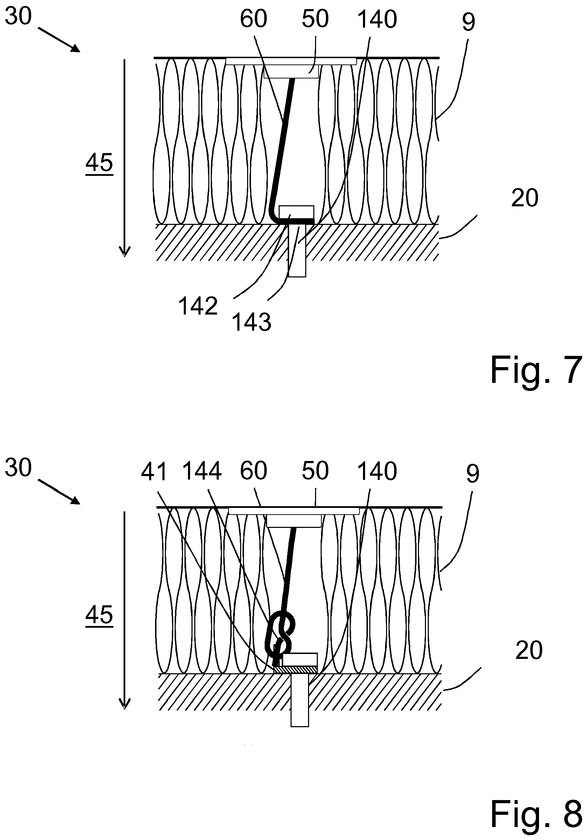

Fig. 7 zeigt einen ersten Gegenstand 9, einen zweiten Gegenstand 20 sowie eine Befestigungsvorrichtung 30 mit einem Verankerungselement, einem Vorspannelement 50 und einem Zugelement 60. Das Verankerungselement ist umfasst einen Dübel 140, welcher in einem zuvor in dem zweiten Gegenstand 20 beispielsweise mittels eines Bohrwerkzeugs erzeugten Loch durch Einschrauben, Verklemmen und/oder Verspreizen in einer Befestigungsvorrichtung 45 verankert ist. Das Verankerungselement weist einen Kopf 142 und einen darunter angeordneten Hals 143 auf, an welchem das Zugelement 60 unmittelbar befestigt ist. Ein Verbindungselement ist im Gegensatz zu dem in Fig. 2 dargestellten Ausführungsbeispiel nicht vorgesehen. Die übrigen Elemente stimmen vorzugsweise mit den entsprechenden Elementen des in Fig. 1 gezeigten Ausführungsbeispiels überein.

Fig. 8 zeigt ebenfalls einen ersten Gegenstand 9, einen zweiten Gegenstand 20 sowie eine Befestigungsvorrichtung 30 mit einem Verankerungselement, einem Vorspannelement 50 und einem Zugelement 60. Das Verankerungselement ist umfasst einen Dübel 140, welcher in dem zweiten Gegenstand 20 verankert ist, und ein Verbindungselement 41. Das Zugelement 60 ist mittels eines Knotens 144 an dem Verbindungselement 41 und somit an dem Verankerungselement 40 befestigt. Die übrigen Elemente stimmen vorzugsweise mit den entsprechenden Elementen des in Fig. 1 gezeigten Ausführungsbeispiels überein.

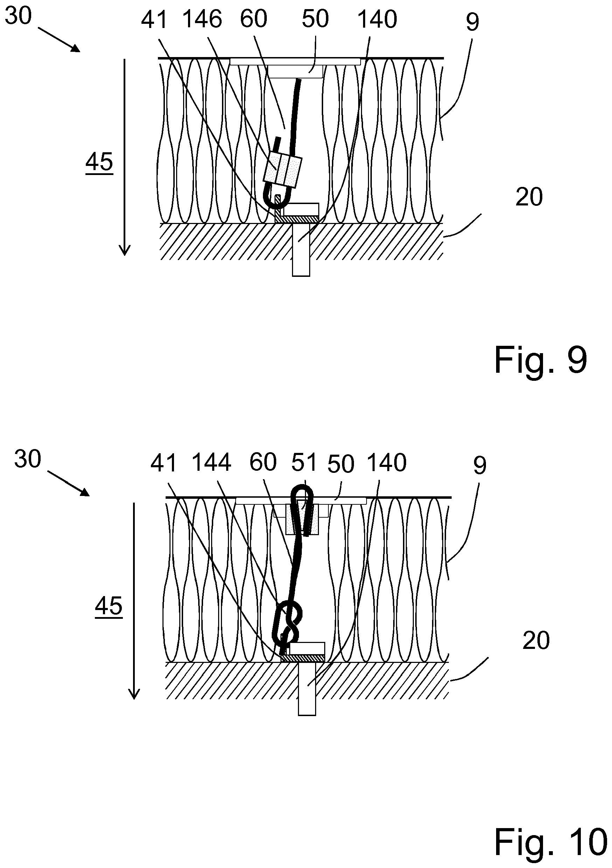

Fig. 9 zeigt ebenfalls einen ersten Gegenstand 9, einen zweiten Gegenstand 20 sowie eine Befestigungsvorrichtung 30 mit einem Verankerungselement, einem Vorspannelement 50 und einem Zugelement 60. Das Verankerungselement ist umfasst einen Dübel 140, welcher in dem zweiten Gegenstand 20 verankert ist. Das Zugelement 60 ist mittels einer Pressklemme 146 an dem Verbindungselement 41 und somit an dem Verankerungselement 40 befestigt. Die übrigen Elemente stimmen vorzugsweise mit den entsprechenden Elementen des in Fig. 1 gezeigten Ausführungsbeispiels überein.

Fig. 10 zeigt ebenfalls einen ersten Gegenstand 9, einen zweiten Gegenstand 20 sowie eine Befestigungsvorrichtung 30 mit einem Verankerungselement, einem Vorspannelement 50 und einem Zugelement 60. Das Verankerungselement ist umfasst einen Dübel 140, welcher in dem zweiten Gegenstand 20 verankert ist, und ein Verbindungselement 41. Das Zugelement 60 ist einerseits mittels eines Knotens 144 an dem Verbindungselement 41 und somit an dem Verankerungselement 40, und andererseits mittels einer Klemmverbindung 51 an dem Vorspannelement 50 befestigt. Die übrigen Elemente stimmen vorzugsweise mit den entsprechenden Elementen des in Fig. 1 gezeigten Ausführungsbeispiels überein.

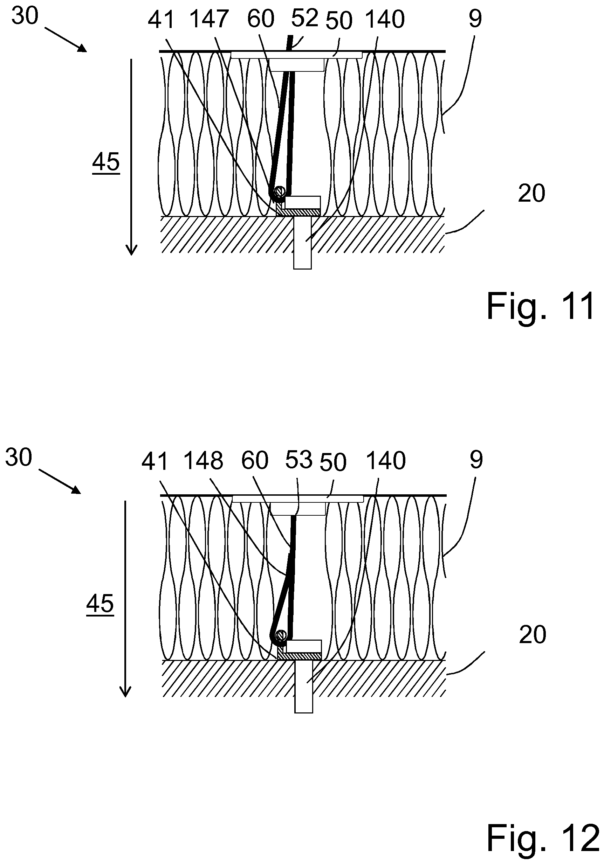

Fig. 11 zeigt ebenfalls einen ersten Gegenstand 9, einen zweiten Gegenstand 20 sowie eine Befestigungsvorrichtung 30 mit einem Verankerungselement, einem Vorspannelement 50 und einem Zugelement 60. Das Verankerungselement ist umfasst einen Dübel 140, welcher in dem zweiten Gegenstand 20 verankert ist, und ein Verbindungselement 41. Das Zugelement 60 ist einerseits mittels Durchlaufens durch eine Öse 147 an dem Verbindungselement 41 und somit an dem Verankerungselement 40, und andererseits mittels einer weiteren Klemmverbindung 52 an dem Vorspannelement 50 befestigt. Die übrigen Elemente stimmen vorzugsweise mit den entsprechenden Elementen des in Fig. 1 gezeigten Ausführungsbeispiels überein.

Fig. 12 zeigt ebenfalls einen ersten Gegenstand 9, einen zweiten Gegenstand 20 sowie eine Befestigungsvorrichtung 30 mit einem Verankerungselement, einem Vorspannelement 50 und einem Zugelement 60. Das Verankerungselement ist umfasst einen Dübel 140, welcher in dem zweiten Gegenstand 20 verankert ist, und ein Verbindungselement 41. Das Zugelement 60 ist einerseits mittels einer Spleissverbindung 148 an dem Verbindungselement 41 und somit an dem Verankerungselement 40, und andererseits mittels einer Klebeverbindung 53 an dem Vorspannelement 50 befestigt. Die übrigen Elemente stimmen vorzugsweise mit den entsprechenden Elementen des in Fig. 1 gezeigten Ausführungsbeispiels überein.

Die Erfindung wurde anhand einer Befestigungsvorrichtung für ein Dämmstoffelement an einer Gebäudehülle beschrieben. Es wird jedoch darauf hingewiesen, dass die Erfindung auch anderweitig anwendbar ist.

## Patentansprüche

1. Vorrichtung zur Befestigung eines ersten Gegenstands an einem zweiten Gegenstand in einer Befestigungsrichtung, umfassend ein Verankerungselement, ein Zugelement und ein Vorspannelement, wobei das Verankerungselement dafür vorgesehen ist, in einer Befestigungsrichtung in dem zweiten Gegenstand verankert zu werden, wobei das Zugelement dafür vorgesehen ist, eine Zugkraft von dem Verankerungselement auf das Vorspannelement zu übertragen, um das Vorspannelement in der Befestigungsrichtung gegen den ersten Gegenstand vorzuspannen, und wobei das Zugelement einen Verbund aus mehreren Fasern umfasst.

2. Vorrichtung nach Anspruch 1, wobei das Zugelement flexibel ist.

3. Vorrichtung nach Anspruch 2, wobei die Fasern relativ zueinander beweglich sind.

4. Vorrichtung nach einem der vorhergehenden Ansprüche, wobei die Fasern jeweils eine Faserlängsrichtung aufweisen, welche im Wesentlichen in Richtung der Zugkraft orientiert ist.

5. Vorrichtung nach Anspruch 4, wobei sich die Fasern jeweils von dem Verankerungselement bis zu dem Vorspannelement erstrecken.

6. Vorrichtung nach Anspruch 4, wobei die Fasern jeweils eine Faserlänge aufweisen, welche kleiner als ein Abstand zwischen dem Verankerungselement und dem Vorspannelement ist.

7. Vorrichtung nach einem der vorhergehenden Ansprüche, wobei das Zugelement an dem Verankerungselement und/oder an dem Vorspannelement befestigt, insbesondere verknotet, verspleisst, vernäht, geklemmt, verschweisst, verlötet und/oder verklebt ist.

8. Vorrichtung nach einem der vorhergehenden Ansprüche, wobei das Verankerungselement und/oder das Vorspannelement einen Kopf und einen Hals aufweist, an welchem das Zugelement befestigt ist.

9. Vorrichtung nach einem der vorhergehenden Ansprüche, wobei das Verankerungselement und/oder das Vorspannelement eine Öse aufweist, an welcher das Zugelement befestigt ist.

10. Vorrichtung nach einem der vorhergehenden Ansprüche, wobei die Fasern zu einem Seil, einem Band oder zu einem Schlauch verbunden sind.

11. Vorrichtung nach einem der vorhergehenden Ansprüche, wobei die Fasern zusammengedreht, geflochten oder miteinander verwoben sind.

12. Vorrichtung nach einem der vorhergehenden Ansprüche, wobei die Fasern Naturfasern insbesondere aus Baumwolle, Flachs, Hanf, Kokos, Manila, Sisal und/oder Spinnenseide umfassen.

13. Vorrichtung nach einem der vorhergehenden Ansprüche, wobei die Fasern Kunstfasern insbesondere aus Karbon, Aramid, Polyester, Polyamid, Polypropylen, Polyethylen und/oder Poly(p-phenylen-2,6-benzobisoxazol)(Zylon)[2] umfassen.

14. Vorrichtung nach einem der vorhergehenden Ansprüche, wobei die Fasern Metallfasern insbesondere aus Eisen, Stahl und/oder Aluminium umfassen.
